# EUROPEAN PATENT APPLICATION

(11) **EP 2 431 928 A1**
(43) Date of publication of application: **21.03.2012**
(21) Application number: 10009100.8
(22) Date of filing: 02.09.2010
(51) Int. Cl.: G06Q 10/00, G01N 35/10, G01N 35/00, B01L 3/00

(54) **Method and apparatus for detecting the position of laboratorial equipment items associated with any kind of laboratory instruments, each laboratorial equipment item thereof**

(71) Applicant: Dittmar, Christian, 8714 Feldbach (CH)
(72) Inventor: Dittmar, Christian, 8714 Feldbach (CH)
(74) Representative: Dietrich, Barbara

(57) **Abstract**

The objective is the design of an innovative technique for the auto detection and data management of any kind of laboratory equipment that can be used with pipetting and analytical instruments. The main idea is to identify and manage the data of laboratory equipment by placing electronic radio frequency tags (RFID tags) and by using special RFID sensors/readers. The tags will provide the type and location of the laboratory equipment on the layout of the instrument and during the process of the identification they will also store data relative to the laboratory equipment such as available volume, liquid types etc., and the sensors will locate and identify the equipment and at the same time interact with the tags for reading and storing information. RFID tags meet the requirements both from a technical aspect since they vary in size and capacity but also from a technological aspect since they provide the proper interface for write/read through the sensors.

## Description

Liquid handling Instruments are used for several medical applications such as the extraction and enrichment of samples, the elution of micro organisms using a liquid buffer to remove the solid phase of the sample, lmmunohaematology, blood test conduction (screening), the design of micro molecules and materials through the Interface of certain instrument., quantification of nucleic acids in liquid samples with the use of UV rays or spectroscopy, separation of deoxyribonucleic (DNA) and ribonucleic (RNA) acids or protein molecules using gel and electrodes (Gel Electrophoresis), the immunohistochemistry, ie the identification of antigens in Infected cells using antibodies that adhere to antigens, the hybridization using DNA or RNA to detect DNA sequences in infected cells called situ hybridization, more specifically the detection of a specific sequence of genetic code into chromosomes With the use of fluorescence (Fluorescent in situ hybridization - FISH), the isolation of genetic code for medical and forensic analysis, cell culture and other cases.

A liquid handling instrument generally consists of a worktable, a robotic arm(s), an integrated computer unit and an application and its interface for the management of the processes. The instruments on the market very, as far as their worktable size, the number of the available robotic arms, the operability, the type of Labware they manage etc. The worktable is the area where the labware items can be placed on and where any executed process takes place. Its available positions are predefined and are limited in number.

The current procedure, in order to achieve a process execution, is to define the working environment by a user. In all the procedures that are described in the following section, nothing is considered as predefined and thus user has to define everything from scratch. In the beginning, the user has to go through a "one-time" procedure which is most commonly called "teaching". The aim of this procedure is to store the dimensions and other parameters of a labware or hardware equipment, e.g. height, width, length, wells position etc., to the instrument software. This procedure is an advanced and time consuming task that only senior laboratory personnel can perform, due to the fact that the values entered have to be extremely accurate. A divergence of one or two mm could be enough to cause an accident - crash on the medical equipment placed on the instrument deck.

Usually, dedicated software components are developed to assist users to complete the teaching. In short, the teaching is conducted with the use of these components by taking the following steps:
1. Define some standard positions on the deck of the instrument
2. Place each labware/hardware on an allowed position
3. Move the channel head to key positions that define the shape and layout of each item.
   For example a rack has the starting position (X, Y, Z) = (0, 0, 0) which has a relative position of (X', Y', Z') to a standard position, as described in step 1.
4. Store the positions for that hardware/labware item
5. Repeat step 2, 3 and 4 for each hardware/labware item

Upon defining the available equipment, users are able to define layouts by positioning labware and hardware on the worktable, according to certain positioning rules. These rules are related to the available positions where each equipment can be placed on and whether an equipment can be stacked on other equipment. - Note that on specific instruments, users can define numerous layouts, especially when the instrument is operated under complex environments (e.g. laboratories) where many distinct processes can be held.

Having prepared all the above, a process can be executed. That means that the user has selected one of the available layouts and prepared the liquid samples and the equipment for the process that will be initiated (e.g. shakers, thermo elements etc.).

One important issue is the correct placement of the laboratory equipment on the deck. Currently, the user has to place the corresponding equipment on the deck by having a look on the selected layout. This procedure is strictly user dependant since it's up to the user's experience to select the correct equipment and place it on the correct position, keeping in mind that there are several different types at medical equipment that are alike. Minor mistakes can cause critical errors during run time. A mechanism is missing which will double check whether the medical equipment in place, is based on the selected layout.

During the execution of the process, user should be able to keep track of any liquid aspiration, dispensations or mixtures produced and all the phases of the mixture. It is quite important that this information is accurate, because errors are likely to occur while storing and processing it. Currently this information it gathered by manually scanning the barcode labels attached to the equipment (i.e. tubes) through the use of a barcode camera which is mounted on the deck. The process needs to be paused each time a barcode scanning is required causing this procedure to become tedious and time consuming. In this case, tubes and plates have to be moved in front of the camera in order for the former to read the corresponding barcode. These 1 D or 2D barcodes can store limited information. Therefore, upon reading the barcode data, the instrument has to connect to the database system of the laboratory (LlMS) through host connection in order to get information regarding the action that has to take place to this sample. This procedure is time consuming since there could be hundreds of samples under examination on a single process.

Concluding, apart from the aforementioned problems, there are a lot of drawbacks regarding the procedures of manually defining layouts and teaching, such as:
- Unbearably high cost of the training sessions conducted by robotic laboratorial equipment manufacturing companies, which are essential for clients all over the world.
- The laboratory employees should also be trained for the execution of processes end the administration of the laboratorial equipment, leading to a vast slowdown of the research process.
- The whole process of the definition of a layout on laboratorial equipment becomes time consuming, demands advanced expertise for the software embedded on the equipment and as a result the users of laboratorial equipment have to allocate more time on the administration of the equipment than the executable processes themselves.

The object of the invention is the design and implementation of an Innovative integrated solution for the detection and management of laboratorial equipment used on liquid handling and analysis Instruments.

The integrated solution will focus on:
1) Layout detection procedure: The objective is to automatically detect and identify laboratorial equipment placed on the Instrument. In order to achieve this, electronic radio frequency identification (RFID) tags should be attached to each laboratorial equipment Item, which will store the type and parameters of the equipment. With the use of RFID sensors and readers, the position of each Tag on the instrument will be located and the type of the item where it has been attached to will be read instantly.
2) Information storage: The main concept is to store any required information on the RFID Tags placed on the laboratorial equipment. Far example:
   a. Replace tube barcode with RFID Tag
   b. Replace plate barcode with RFID Tag.
   c. Add RFID Tag to hardware laboratory equipment.
   d. During the execution of a process, sensors interact with RFID tags and read/write information from and to them according to the corresponding laboratorial equipment where the latter are attached to.
   e. Storing all information from the RFID Tags to laboratory data management systems (e.g. LIMS) for further processing.

RFID technology is considered to be the most appropriate technology for this solution since it meets the particular requirements of the integrated solution both technically, since they vary in size, capacity and technology, and practically since they provide a proper interface for reading I writing through the sensors.

The advantages are:
Data extraction and analysis can be conducted by the advanced storage technology provided by the integrated solution. All the information regarding the equipment and its content such as Equipment ID, liquid type, liquid volume, test results etc. are stored on Storage Modules that this integrated solution provides, which are associated with each and every laboratorial equipment item placed on the worktable. All the information saved on the corresponding Storage Modules can be easily retrieved on any computer terminal equipped with a corresponding Reader.

The versatility of the integrated solution and the read-write storage technology that it incorporates, allows the storage of a variety of information, depending on the type of equipment used with it, such as equipment ID, liquid type, sample owner ID, test results, error history and further runtime information data.

The use of hardware or labware equipment along with RFID technology allows a new layout identification procedure to be accomplished. Any layout can be identified with a simple scanning process which will recognise the type of hardware placed on each position. This makes the definition of a new layout an easy task to do, automatic process feasible even for an amateur user, since teaching of the position of each equipment Item will be no longer required, as long as this layout identification procedure is followed. For a new layout to be defined, placing devices, racks, decktrays and other equipment items on the worktable of the instrument would be more than enough. Spatial information (exact location, type of laboratorial equipment used) and all the relative/absolute positions of the placed equipment can be automatically calculated/retrieved by the positioning system that this integrated solution provides.

The use of local network or internet connection is not required for the exchange of data regarding the equipment or any samples between the instrument and another terminal computer. Consequently, confidential data is secure, data leak is less likely to occur and its transfer is not imminent to errors. The data is primarily stored on Storage Modules that are provided by the integrated solution once and it can be easily retrieved, whenever this is needed, with a simple scan of each laboratorial item on a terminal computer equipped with a corresponding reader.

Any changes on the position or the content of the laboratorial equipment items placed on an instrument can be automatically updated in real time during the execution of a process with the use of the integrated solution Reader which is mounted on the Instrument.

Using the integrated solution on laboratorial equipment items as well as mounting its reader system on an instrument will render the detection of a specific sample holder (e.g. Tube) on a layout much simpler. With the use of a simple scanning and detection process, users can easily and wirelessly locate the claimed sample (e.g. a doctor searching for the sample of a specific patient) with the use of the Locating System that the integrated solution incorporates.

This solution can be integrated easily to any single or multiple-arm pipetting, analysis and liquid handling instrument of any construction firm active in this field. Its Storage Modules can be easily attached to and associated with any Items of laboratorial equipment allowing storage of information concerning each specific equipment items.

The definition of new layouts is a one time procedure that is conducted on a liquid handling instrument before any processes are executed. Its complexity renders the process tedious and time consuming. Its demand of highly advanced technical expertise, as far as layout confirmation is concerned, requires more time to be spent on the confirmation procedure itself rather than the execution of liquid handling, pipetting and analysis processes. With the use of the integrated solution, each user will be able to confirm that he has placed the correct equipment (e.g. Hardware, Labware) on the instrument worktable, by just initiating a scanning process. This process will scan the type and name of the equipment placed and It will compare it with the type and name of equipment placed on the exact location of the defined layout, saving valuable time for its users. Thus, carrying out complex processes will be easier and faster for all kinds of users ranging from advanced researchers to just amateur instrument operators. The daily execution routine will be safer and possible user errors that could occur during a manual confirmation of layout will be excluded. This leads to a flawless and non-problematic function of the instrument, since there will be less demand for technical expertise or user interference, less equipment crashes and safer diagnosis and thereafter treatment of diseases or extraction of test results.

The replacement of the barcode on the tubes with RFID Tags gives the opportunity to store a great number of information on the equipment itself. There will be no need to connect to the LIMS system to get information about the tests that have to be conducted to a sample, since these will be included in the RFID. Furthermore the replacement of the barcodes on the plates with RFID will enable the system to store a greater amount of information rather than the Plate ID that was currently stored there, e.g. liquid type and volume that is placed in the plate during run time. Finally, the introduction of RFID Tags on hardware laboratory equipment, apart from the automatic identification and position inference possibilities, will allow the storage of other useful information like error history and further runtime Information.

The process run time is reduced since no manual barcode scanning takes place. All information is stored in tags and the history of a liquid is automatically updated in real time during the execution of a process. Furthermore, since the history of a liquid is stored in a tag, the information can be retrieved wherever an RFID tag reader is installed. This means that the information is easily transferable and it is not imminent to errors. It follows the sample throughout the execution of the process and procedures data can be stored. No teaching is needed. Users can directly place the equipment on the worktable of the Instrument such as devices racks and tubes and perform any process without prescribing spatial information (exact location, type of laboratorial equipment used). All positions will be automatically calculated according to the RFID based positioning system. New equipment can be added for use with a process without the interference of an expert. The maintenance cost of an Instrument is reduced since there will be less demand for technical support. By automating the execution of a process the user Interference is less and thus fewer problems may occur. This solution introduces the USe of RFID tags on tubes and other equipment items and thus users will benefit from all the advantages that this technology offers. Hence, detecting a sample will be simpler because users can wirelessly estimate the position of each equipment item (e.g. tubes). For example if a doctor searches for the sample of a patient, he can locate It not by reading or scanning barcode labels individually, but by just approaching the rack with the tubes to an RFID tag reader or vice versa. The solution will be designed to allow researchers working in medical laboratories to carry out complex processes by providing them with the essential tools for easier, faster and safer diagnosis and treatment of diseases, allowing them to solve other complex problems. This concept can provide a promising and integrated solution that can be applied easily to any multiple-arm pipetting and analysis instrument of any construction firm active in this field. The innovation introduced will provide immediate solutions to medical laboratories so as to deal with these problems. The operator will be able to create new processes efficiently, easily, quickly and without great expertise or familiarity, avoiding any possible mistakes at the same time.

The detection and identification of laboratorial equipment with the use or RFID Technology is the key factor for this solution. An RFID Tag consists of three parts:
A. An antenna coil
B. A transceiver
C. A chip where data is stored

The sensor receives and transmits radio waves leading to the passive or active operation of the tag, allowing reading and writing of data from and to its storage chip. The sensor also bears an antenna, a transceiver and a decoder combined with an appropriate microcomputer controller. RFID Tags can be categorized in two distinctive groups, depending on their energy independence, active tags and passive tags. Active tags are battery-assisted and as a result the scope of operation is wide (covering a radius of some meters), due to the intensive electromagnetic radiation. On the contrary, passive tags operate under the power produced by the antenna coil (when a signal is received) and their scope of operation is narrower than the one that active tags can cover. Passive tags have the advantage of lower production and maintenance cost than active tags.

Tags can also be categorized in three other groups, depending on their response frequency, the Low Frequency Tags - LF (from 30 KHz up to 500 KHz) and High Frequency Tags - HF (around 13 MHz) which offer a limited scope (some centimetres) and communication speed. There are also the Ultra High Frequency RFID Tags - UHF (from 300 MHz to 400 MHz, from 850 MHz to 960 MHz and 2.4 GHz up to 2.5 GHz) that offer a wider scope of operation end higher communication speed.

The application of RFID Technology requires the combination of using active or passive tags for the tagging of objects by using the appropriate industrial Scientific Medical-ISM range of frequencies.

The solution requires 3 basic components:
1) RFID tags
2) RFID sensors
3) Interface

The Electronic radio frequency tags are
- placed
- attached
- Integrated
to each and every laboratorial equipment item.

Based on the technical and functional specifications of the laboratorial equipment and the instrument on which the solution will be applied to, suitable tags will be determined that could satisfy these special needs. Factors that will be taken under consideration are:
Size of the tag: The size of the tags will depend on the size and the structure of the laboratorial equipment. Their dimensions will vary from few millimetres to few centimetres in length, width and height. These specific size limits can guarantee that the tags can be placed on the laboratorial equipment regardless of the structure of the latter.

Position of the tag on the laboratorial equipment: The precise position of the tag on the laboratorial equipment is interdependent on several factors such as:
1) Shape of the equipment
   - rectangle
   - conical
   - tube
2) Thickness of the equipment
3) Usability

One of the equipments's surfaces might be used, therefore it can not be covered by a tag.

Each laboratorial equipment is designed in such a manner that allows it to be placed on specific positions on the instrument. Hence, the placement of the tag on the laboratorial equipment varies in order to meet the aforementioned specifications.

An instrument conducts several different operational procedures. Hence, tags should cover different capacity needs. Some example procedures are:
1) Layout detection: For the detection of the laboratorial equipment on the layout, each tag should store several information e.g.,
   - its ID,
   - the type of the laboratorial equipment that It Is attached to etc.
2) Sample Reading: For the sample reading procedure each tag should be able to store the barcode data that are printed on the tubes and indicate information such as
   - Owner of the sample.
   - Sample information
3) Process execution: During process execution the tag should be efficient to store information e.g.
   - The volume and type of the liquid that is placed in the laboratorial equipment
   - Errors that may occur

This information should be identified and encoded in the Tag in such a way that it will be easily accessible.

RFID readers will be used in such a way that the most accurate detection and the most optimized interaction with the electronic tags can be achieved. Several different provisions will be examined like:

### 1) Sensors installed in fixed points on the instrument

This structure gives the advantage of simplifying the integration procedure of the solution on the instrument. By applying this structure, the sensors are not considered being movable devices but fixed mechanical parts of the instrument. Therefore they do not interfere with the functional procedures of the instrument and the complexity of handling the sensors is significantly decreased.

The subject for research in this provision is the transmission range of the sensors. By using a stationary sensor that conducts the communication and data transfer with the tags, the quality of this communication highly depends on the signal strength. In addition, the signal strength depends on the size of the sensor's antenna and, therefore, the size of the sensor itself. The bigger the size of the antenna, the wider is the signal strength.

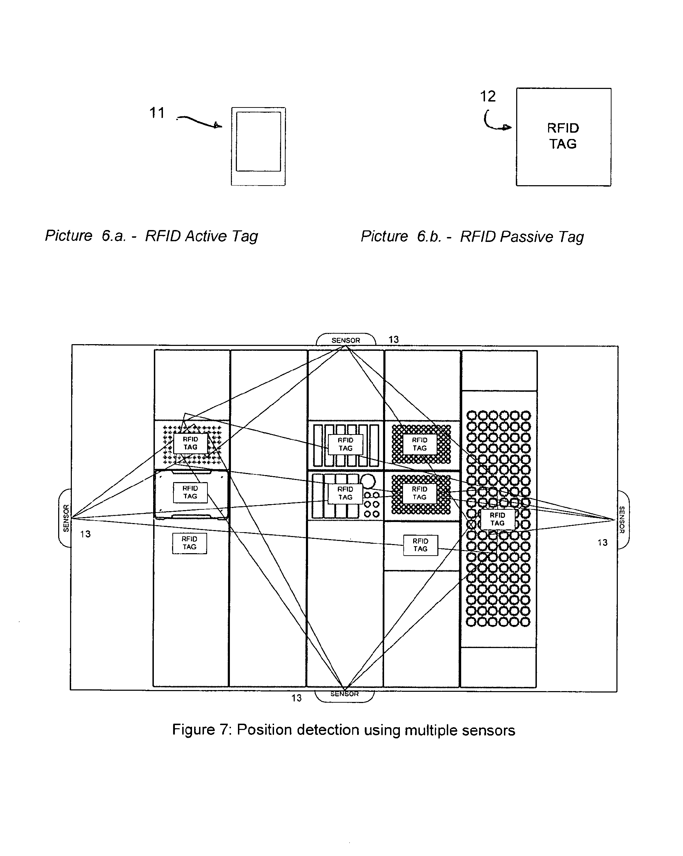

Another subject under research will be the exact position of the sensor on the instrument. The best position in terms of coverage versus size would be the centre of the instrument so that it can communicate with all the tags having the smallest size possible. However, this position will affect the general functionality of the instrument (hardware specifications have to change In order to include the existence of a fixed stationary sensor in the centre of the instrument). Note that using just a single sensor might meet the requirements needed for communicating with the tags, however it does not enable an efficient mechanism for the position detection of the tags. The reason is that although the distance radius from the tags can be detected (based on the signal strength), the exact position of them can not. Therefore, multiple sensors should be used in order to achieve accurate position detection. The combination of the position data collected by the sensors can lead to the detection of tags position. Figure 7

In this scenario, the sensors will be able to be moved over the instrument's surface. In this case the opposite concept is applied. The sensor considers being a device that is either placed on the instrument and is lifted and moved by the robotic arm or it is integrated with the robotic arm. During the communication procedure, the arm is moved over the corresponding tag. Since the sensor will be a device, it has to meet certain required dimensional and functional specifications in order to be adaptable to different instruments.

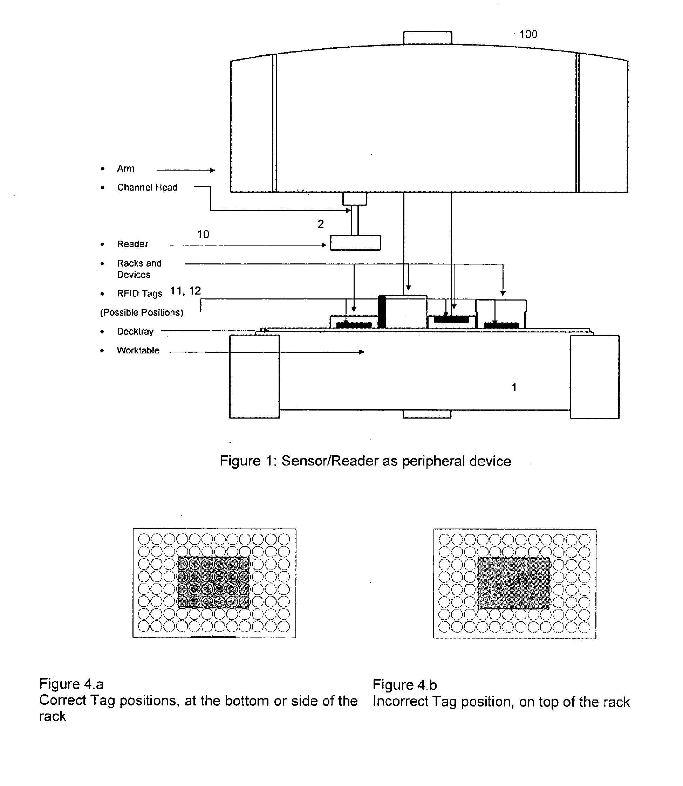

Taking Into account the aforementioned points, several different structures will be examined like:
A) Peripheral Positioning: A number of sensors installed perimetrically on the instrument so that the transmission radius can cover the whole surface of the Instrument. The sensors will have standard, fixed positions end their exact absolute location will be known. Their size should be relatively limited to avoid any effect on the functionality of the instrument.
B) Peripheral device: The sensor will be designed as a device and will be placed in the instrument along with the rest of the laboratorial equipment. The robotic arms will be able to lift the sensor and move it over any possible position on the instrument (Figure 1).
C) Integrated with the robotic arm: The sensor in this case will be integrated into the arm of the instrument and will be activated during layout detection procedure and during process execution. It is a necessity to minimize the sensor size without affecting the signal strength.

The Interface will be responsible for the interaction between the instrument and the system. It will communicate with the sensors by collecting data from the electronic tags, process them and transfer them to the application of the instrument for further processing.

It consists of modules that interact with each other. The sensor module will be responsible for the interaction with the system of the sensor and it will implement the necessary interface for data exchange. This specific module is responsible for detecting the position of the equipment placed on the instrument. The position detection method differs based on the sensors structure applied on the instrument. Another module is responsible for identifying the type of the equipment from the data collected from the electronic tag. A data management module is responsible for managing any kind of data stored in the tags. This data is related to characteristics of the laboratorial equipment itself along with information concerning the content of the equipment during process execution (liquid type and volume, name of owner's sample etc). An instrument communication module provides the required functionality to the instrument software to communicate with the sensors and exchange the necessary information for the successful implementation of the concept.

There are also several procedures that will be implemented on this concept.

There are also several procedures that will be implemented on this concept.

During the Initialization procedure, each tag Is "logically" connected With the laboratorial equipment to which it will be attached. Based on the dimensions (volume, size etc) and the functional specifications (usability, position on the Instrument etc) of the laboratorial equipment, the defined tag characteristics are shape and figure, position on the equipment and l or required data volume (bits). Through this procedure, all necessary information of the laboratorial equipment is stored in the tag. After that, the former are attached to the equipment.

It will implement the position and type detection procedures of the equipment placed on the instrument and examine several methods like:

### A. Position detection using multiple sensors

In this scenario we will examine the feasibility of detecting the position of tags using multiple sensors. The user will place the laboratorial equipment on the surface of the instrument and initiate the detection procedure. The sensors will scan the surface of the instrument and when a tag is detected they will return information concerning the distance that was detected. The information gathered by the sensors will be sent to the interface which will process the information and conclude on the precise position of the laboratorial equipment. Figure 7 depicts such a scenario, by using four sensors to detect a layout by scanning the surface of the instrument, seeking for tags attached to the laboratorial equipment.

### B. Position detection using sensor.

This method will take advantage of the fact that there are predefined positions on the Instrument on which the equipment can be placed.

For example, during the detection procedure, the arm could:
- Pick the sensor from its initial position,
- Enable the sensor (in the case of the integration)

Substantially, it will move over the predefined positions, while the sensor will detect the corresponding tag. It is obvious that the actual- position of the equipment is the current arm position.

The detection of the type of the equipment is feasible through tags/sensor interaction. Information is collected from the tags concerning the laboratorial equipment which the tags are attached to. This information is transferred to the interface and after proper processing the type of the equipment is returned to the software of the instrument.

This procedure is related to the reading/writing concept of the tags. It can be applied regardless of the selected structure of sensors on the instrument. During read/write procedure, information must be written/read to/from a tag.

An issue that is open for research is achieving the best quality of transmission by finding the equilibrium between storage capacity/size of tags against distance between them and the sensors. In details, the tags that will have to be used must have a storage capacity of some Kbytes. At the same time, the size of the tags must be limited in order to maintain the ability to be attached to the laboratorial equipment. Hence, in order to achieve the necessary storage capacity and keep the tag small, the size of the antenna must be reduced. This will subsequently affect the transmission range since the smaller the receiving antenna of the tag is, the greater the difficulty for communication and data exchange. In order to improve the quality of the communication, the transmission range of the sensors should be increased, and this will result in either to increase their size or to the need ot decrease the distance between the sensor and the tag during the communication. The goal is to find the right combination in order to accomplish the best product quality.

Figure 1 shows a Sensor/Reader as peripheral device 100. Over the worktable 1 in Figure 1 there is the robotic arm 2 being able to move in all three dimensions covering all the working area and lowering its head down to the worktable surface. The robotic arm 2 consists of multiple heads 3 depending on the type of the instrument. Several accessories and other equipment can be mounted on these heads, allowing the aspiration, dispensation or mixing of the liquid samples used, the calculation of their volume, raising and moving equipment from one position to another and the use of other devices.

The robotic arm 2, as far as laboratorial equipment items and liquid samples used are concerned, has the ability to lift objects, transfer items and liquids, place objects on the instrument worktable, create new layouts, modify existing layouts, stack racks, securely position racks, dispose of unnecessary equipment, replace items, aspirate liquid end air, dispense liquids, mix liquids, calculate liquid volume and/or use devices and equipment. Therefore, It performs movements requiring ultimately accurate positioning of any object on the instrument. Nay slight divergence of a few mm may result in false results or even serious accidents.

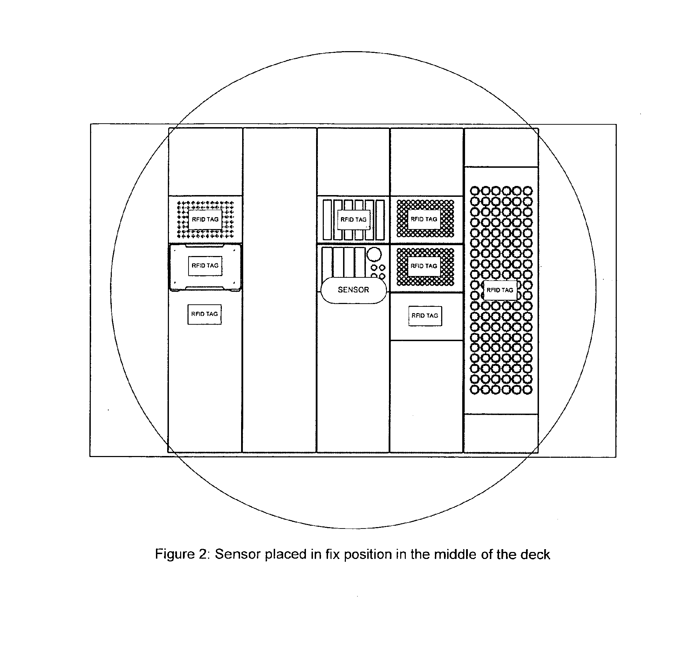

Figure 2 shows a view of the worktable 1 and Figure 7 the same particularly the position detection using multiple sensors 13.

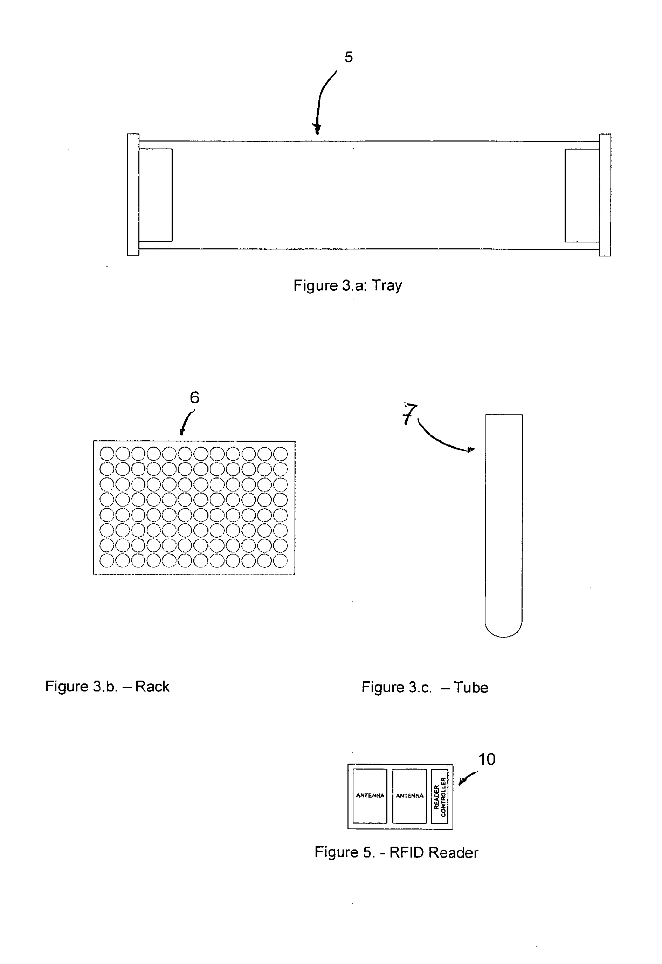

The equipment used can usually be devices or trays 5 (Figure 3.a), racks 6 (Figure 3.b) and tubes 7 (Figure 3. c). The devices can be either mechanical, meaning that the use of the robotic arms 2 is required too, electronic or a combination of both types. There are devices for dillution, analysis, centrifugation, washing the equipment etc. The racks and tubes may vary in the way they are used or operated, in size, shape, capacity, material they are made of, if they are reusable or not and differ in specifications and they can be placed in certain positions on the worktable of the liquid handling instrument.

Figure 4a, depicts two valid positions on a rack where a tag can be placed on 6. On the other hand, In figure 4.b the tag's position preventss the use of the specific laboratorial equipment 6 since the surface where the liquids are laid down is covered.

Figure 5 shows a RFID- Reader 10 and Figure 6a a RFID- active tag 11, while Figure 6b describes a RFID passive Tag 12.

The instrument can execute processes on specific lab equipment. The user is able to create and execute new processes, configuring them manually by setting its properties and choosing the equipment where the process will be executed on. The processes take place on the worktable and can vary from being simple to being quite complicated. The user of the instrument can manage liquid samples and perform medical tests on them such as the extraction of samples, their dispensation to tubes, their mixing with other liquid samples, sample separation, calculation of the concentration of a certain substance on a sample etc. The estimated duration of a process depends on its complexity. Any process can be executed with the use of the robotic arm of the instrument. The user creates a process on the application incorporated with the instrument, as well as defines the initial layout of the equipment placed on the worktable, before it can be executed.

Apart from laboratorial equipment items, the robotic arm 2 can also aspirate small amounts or liquid or a liquid mixture with air with the use of special tips attached to any of its heads. The tips allow it to aspirate and dispense the liquid and transfer it from one rack to another, as well as to stir a liquid. The robotic arm has also the ability to use devices e.g. a special device for removing tips off the robotic arm head and their disposal off the instrument.

All functions of a medical Instrument can be used via the operational program installed on any multiple arm liquid handling instrument. Through this application, the user can provide any data or parameters regarding the laboratorial equipment to the instrument computer which are required for the process to be carried out, their modification and their storage to the hard disk. The application simulates a virtual environment of the instrument worktable and the laboratorial equipment items, as they are actually placed on the instrument so that thee user can execute the desired process.

## Claims

1. A method of detecting the position of laboratorial equipment items associated with any kind of laboratory instruments, each laboratorial equipment Item thereof having a so called RFID Tag placed, attached or integrated indicatively to a position on a laboratorial equipment Item but not limitative in any way, whereas each RFID Tag is able to store any kind of information data such as medical data.

2. The method of exchanging data between RFID Tags used by any kind of laboratory instrument and placed, attached or integrated indicative to a position on a laboratorial equipment item but not limitative in any way, whereas this method uses the RFID technology and each RFID Tag is able to store any kind of information data such as medical data.

3. A method according to claim 1 or 2 wherein laboratorial equipment items are used by any kind of liquid handling robotic arm pipetting instruments.

4. A method according to one of the claim 1 till 3, wherein laboratorial equipment items are used on more than one laboratory instruments and these items can be indicatively moved from on instrument deck to another but not limitative in any way, by a mechanism e.g. pipetting arm which is able to move in all three dimensions.

5. A method according to one of the claims 1 till 4, wherein more than one so called RFID sensors/readers are installed perimetrically on the instrument on any possible positions and are connected to it for data exchange.

6. A method according to one of the claims 1 till 5, wherein a movable RFID sensor/reader, used to locat/read/write on the RFID Tags, is mounted on an arm, which is able to move in all three dimensions.

7. A method according to one of the claims 1 till 6, wherein standalone RFID sensors/readers, used to locate/read/write RFID Tags, is picked up by an arm, which is able to move in all three dimensions.

8. A method according to claims 1, 6 or 7 wherein the sensor/reader scans the so called worktable of an instrument, searching for laboratorial equipment items placed on specific predefined positions, as depicted but not exclusively as in figure 4, or in any other flexible position.

9. A method according to claim 2, wherein Information data is gathered-from the RFID Tag attached to a so called source sample holder and it is being stored on the RFID Tag of a so called target sample holder.

10. A method according to claim 1 or 2, wherein any errors or obstacles aroused during any procedure can be tracked and stored on any of the RFID Tags attached to laboratorial equipment Items.

11. A method according to claim 9, wherein a mobile lab could send the target plate/tube to another lab without the need to connect to a LIM system and all information is sent along and the corresponding RFID tag that is attached to the plate.

12. An apparatus of detecting the position of laboratorial equipment items associated with any kind of laboratory instruments, each laboratorial equipment item thereof having a so called RFID Tag placed, attached or integrated indicatively to a position on a laboratorial equipment item but not limitative in any way, whereas each RFID Tag is able to store any kind of information data such as medical data.

13. An apparatus of exchanging data between RFID Tags used by any kind of laboratory instrument and placed attached or integrated indicatively to a position on a laboratorial equipment item but not limitative in any way, whereas this method uses the RFID Technology and each RFID Tag is able to store any Kind or information such as medical data.

14. An apparatus according to 13 or 14 wherein laboratorial equipment items are used by any kind of liquid handling robotic and pipetting instruments.

15. An apparatus according to one of the claim 12 till 14 wherein a movable RFID sensor/reader, used to locate/read/write on the RFID tags, is mounted on an arm, which is able to move in all three dimensions and standalone RFID sensors/readers, used to locate/read/write Rfid tags, is picked up by an arm, which is able to move in all three dimensions.
